# EUROPÄISCHE PATENTSCHRIFT

(11) **EP 1 937 734 B1**
(45) Veröffentlichungstag und Bekanntmachung des Hinweises auf die Patenterteilung: **04.04.2018**
(21) Anmeldenummer: 06807307.1
(22) Anmeldetag: 16.10.2006
(51) Int. Cl.: A01N 37/04

(54) **BIOZIDE POLYMERE**
BIOCIDAL POLYMERS
POLYMERES BIOCIDES

(30) Priorität: 17.10.2005 AT 16922005
(43) Veröffentlichungstag der Anmeldung: 02.07.2008
(73) Patentinhaber: KE KELIT Kunststoffwerk Gesellschaft m.b.H., 4020 Linz (AT)
(72) Erfinder: GSTREIN, Xaver Norbert, A-2640 Gloggnitz (AT); KERN, Wolfgang, A-8055 Seiersberg (AT); RAMETSTEINER, Karl, A-4020 Linz (AT); SEYFRIEDSBERGER, Gerhard, A-4850 Timelkam (AT); STELZER, Franz, A-8020 Graz (AT)
(74) Vertreter: Patentanwaltskanzlei Hübscher
(86) Internationale Anmeldenummer: PCT/EP2006/067452
(87) Internationale Veröffentlichungsnummer: WO 2007/045634

(56) Entgegenhaltungen:
- ILKER M F ET AL: "Modular Nobornene Derivatives for the Preparation of Well-Defined Amphiphilic Polymers: Study of the Lipid Membrane Disruption Activities" MACROMOLECULES, ACS, WASHINGTON, DC, US, Bd. 37, Nr. 3, 16. Januar 2004 (2004-01-16), Seiten 694-700, XP002364604 ISSN: 0024-9297
- MAYNARD H D ET AL: "SYNTHESIS OF NORBORNENYL POLYMERS WITH BIOACTIVE OLIGOPEPTIDES BY RING-OPENING METATHESIS POLYMERIZATION" MACROMOLECULES, ACS, WASHINGTON, DC, US, Bd. 33, Nr. 17, 22. August 2000 (2000-08-22), Seiten 6239-6248, XP001050858 ISSN: 0024-9297

## Beschreibung

Die Erfindung betrifft biozide Polymere, die auf einfach ungesättigten bicyclischen oder quadricyclischen Monomeren mit Stickstoff-Funktionalitäten oder Phospor-Funktionalitäten basieren, Verfahren zu deren Herstellung, und deren Verwendung.

Es gibt eine Vielzahl von Mikroorganismen, die sich an Oberflächen ansiedeln und zu Biofilmen vermehren. Eine derartige Besiedlung kann aus vielerlei Gründen unerwünscht sein, wie beispielsweise hygienische Bedenken im Fall von medizinischen Artikeln oder Transport- und Verpackungsmaterialien für Nahrungsmittel und Lebensmittel, oder aus wirtschaftlichen Überlegungen im Fall von Schiffsrümpfen.

Eine Möglichkeit zur Vermeidung einer Besiedlung durch Mikroorganismen besteht in der regelmäßigen Behandlung gefährdeter Oberflächen mit äußerlich aufzutragenden Desinfektionsmitteln. Nachteile einer derartigen Vorgehensweise bestehen u. a. in der notwendigen oftmaligen Wiederholung der Behandlung, in der schwierigen Abschätzung der notwendigen Mengen und in den oft gesundheitlich bedenklichen Eigenschaften der Desinfektionsmittel.

Eine andere Möglichkeit zur Vermeidung einer Besiedlung durch Mikroorganismen besteht darin, Materialien zu verwenden, deren Oberflächen biozid wirksam sind. Derartige Materialien können etwa durch Einarbeitung von biozid wirksamen Substanzen in ein Trägermaterial hergestellt werden. Bekanntermaßen wirken metallorganische Verbindungen, Metallsalze von bspw. Zinn, Silber oder Kupfer, oder spezielle organische Verbindungen als Biozide. Werden derartige Verbindungen einem Kunststoff oder einem Lackanstrich beigesetzt, wird eine fäulnishemmende bzw. biozide Wirkung erhalten. Laut US 4532269 kann beispielsweise ein Terpolymer aus Butylmethacrylat, Tributylzinnmethacrylat und tert.-Butylaminoethylmethacrylat als antimikrobieller Schiffsanstrich verwendet werden. Nachteile solcher Materialien bestehen in der Abnahme ihre bioziden Wirkung mit der Zeit, da die Konzentration der bioziden Substanzen im Trägermaterial durch Diffusion und Auswaschung kontinuierlich schwindet, und in der mit dieser Freisetzung der bioziden Substanzen verbundenen Umweltbelastung.

Weiters können Polymermaterialien mit bioziden Eigenschaften dadurch erhalten werden, dass man zu ihrer Herstellung mit biozid wirksamen Gruppen substituierte Monomere verwendet. In diesem Fall ist die biozide Wirkung dauerhaft und wird nicht durch allmähliches Auswaschen und Diffusion vermindert. Entsprechend wird in EP0862858 ein Copolymer aus tert.-Butylaminoethylmethacrylat und aliphatisch ungesättigten Monomeren beschrieben. WO01 18077 offenbart ein Homopolymer aus Acryloxyalkylaminen oder Methacryloxyalkylaminen. Aus llker et al., Macromolecules 2004, 37, 694-700, sind antibakterielle Polymere aus cyclischen Anhydriden oder Imiden auf Norbomenbasis bekannt.

Der vorliegenden Erfindung liegt die Aufgabe zugrunde, weitere biozid wirksame Polymere zu entwickeln, deren Anwesenheit zur Abtötung von Mikroorganismen führt und die eine Ansiedlung von Mikroorganismen auf Oberflächen verhindern.

Unerwarteterweise wurde gefunden, dass durch Polymerisation von bestimmten Norbomenderivaten Polymere mit ausgezeichneter biozider Wirksamkeit gewonnen werden können.

Gegenstand der Anmeldung sind daher biozide Polymere enthaltend wiederkehrende Struktureinheiten nach der Formeln 1 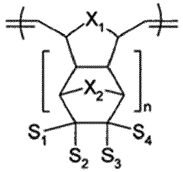
n= 0, 1
wobei X1 und X2 ausgewählt sind aus der Gruppe
-CH₂-, -CH₂-CH₂-, -O- oder =(C=C(R1)R2) mit R1, R2, = H oderein geradkettiges oder verzweigtes C₁-C₂₀-Alkyl,
wobei die Substituenten S1, S2, S3, S4 ausgewählt sind aus der Gruppe H, geradkettiges oder verzweigtes C₁-C₂₀-Alkyl, Cycloalkyl, Aralkyl, Alkylaryl, Aryl,
und mindestens einer der Substituenten S1, S2, S3, S4 eine Struktur -a-d, -a-b-d, -b-c-d oder -a-b-c-d aufweist,
wobei a ein geradkettiges oder verzweigtes C₂-C₂₀-Alkylen, bevorzugt C₂-C₆-Alkylen, ein Siloxan, ein Oligo- oder Polysiloxan mit 1-20 Wiederholungseinheiten, ein C₂-C₄-Alkylenglykol oder C₂-C₄-Polyalkylenglykol mit 1-20 Wiederholungseinheiten, ein Cyclopentylen, Cyclohexylen, Cycloheptylen, ein Benzylen, Phenylethylen, ein Nonylphenylen, ein Phenylen, Naphthylen, ein Methylenphenylen oder ein Phenylenmethylen ist,
wobei b -O-, -O-CO-, -CO-O-, -O-CO-O-, -CO-, -CO-NH-, -NH-CO-, -O-CO-NH-, -NH-CO-NH-, -NH-C(NH)-NH-, -NH-CO-O- oder -N(R3)- mit R3 = H, ein geradkettiges oder verzweigtes C₁-C₆-Alkyl, Phenyl, Benzyl, Phenylethyl oder Nonylphenyl ist,
wobei c ein geradkettiges oder verzweigtes C₁-C₂₀-Alkylen, bevorzugt C₁-C₆-Alkylen, ein Siloxan, ein Oligo- oder Polysiloxan mit 1-20 Wiederholungseinheiten, ein C₂-C₄-Alkylenglykol oder C₂-C₄-Polyalkylenglykol mit 1-20 Wiederholungseinheiten, ein Cyclopentylen, Cyclohexylen, Cycloheptylen, ein Benzylen, Phenylethylen, ein Nonylphenylen, ein Phenylen, Naphthylen, ein Methylenphenylen oder ein Phenylenmethylen ist,
und wobei d
-e(R4)R5 mit e = N oder P,
wobei die Gruppe -e(R4)R5
ein Guanidinyl-Rest -NH-C(NH)-NH₂, ein N-substituierter Gyanidinyl-Rest, ein Biguanidinyl-Rest, ein Hydrazinyl-Rest -NH-NH₂ oder ein N-substituierter Hydrazinyl-Rest ist
und die Reste R4, R5
H, ein geradkettiges oder verzweigtes Cᵣ-C₂₀-Alkyl, Benzyl, Phenylethyl, Nonylphenyl, Phenyl, Naphthyl, Toluyl, Xylyl, Cyclopentyl, Cyclohexyl, Cycloheptyl, Furyl, Pyrrolyl, Thiophenyl oder Pyridinyl sind
oder gemeinsam mit N der Gruppe -N(R4)R5 einen Azirin-, Aziridin-, Azet-, Dihydroazet-, Azetidin-, Pyrrol-, Pyridin-, Azepin- oder Azepan-Ring bilden, wobei der Stickstoff der Gruppe -N(R4)R5 in derartigen ungesättigten Ringen gegebenenfalls eine Doppelbindung zu einem der Substituenten R4, R5 ausbilden und somit in der Gruppe - N(R4)R5 quaterniert vorliegen,
oder gemeinsam mit N der Gruppe -N(R4)R5 und mit einem oder mehreren weiteren unsubstituierten oder substituierten Heteroatomen aus der Gruppe -O-, -S-,-NH-, -N(R6)-mit R6 = H, ein geradkettiges oder verzweigtes C₁-C₂₀-Alkyl, Aralkyl, Benzyl, Phenylethyl, Nonylphenyl , Cyclopentyl, Cyclohexyl oder Cycloheptyl, einen Oxazol-, Triazol-, Tetrazol-, Triazin-, Tetrazin-, Thiomorpholin-, Imidazol-, Thiazol-, Thiadiazol-, Pyrimidin-, Pyrazin-, Pyridazin-, Piperazin- oder N-substituierten Piperazin-Ring bilden, wobei der Stickstoff der Gruppe -N(R4)R5 in derartigen ungesättigten Ringen gegebenenfalls eine Doppelbindung zu einem der Substituenten R4, R5 ausbilden und somit in der Gruppe - N(R4)R5 quaterniert vorliegen,
oder d
   ein 3-7 gliedriger gesättigter oder ungesättigter Stickstoff-Heterocyclus, dessen Bindung an die Komponente a, b oder c des Substituenten S1, S2, S3 oder S4 über einen Ring-Kohlenstoff erfolgt, bevorzugt ein Azirin-, Aziridin-, Azet-, Dihydroazet-, Azetidin-, Pyrrol-, Pyrrolidin-, Pyridin-, Piperidin-, Azepin, Azepan- Heterocyclus,
oder ein 5-8 gliedriger gesättigter oder ungesättigter Heterocyclus ist, enthaltend N und eines oder mehrere weitere unsubstituierte oder substituierte Heteroatome aus der Gruppe -O-, -S-,-NH-, -N(R6)- mit R6 = H, ein geradkettiges oder verzweigtes C₁-C₂₀-Alkyl, Benzyl, Phenylethyl, Nonylphenyl , Cyclopentyl, Cyclohexyl oder Cycloheptyl, dessen Bindung an die Komponente a, b oder c des Substituenten S1, S2, S3 oder S4 über einen Ring-Kohlenstoff erfolgt, bevorzugt ein Oxazol-, Triazol-, Tetrazol-, Triazin-, Tetrazin-, Morpholin-, Thiomorpholin-, Imidazol-, Thiazol-, Thiadiazol-, Pyrimidin-, Pyrazin-, Pyridazin-, Piperazin- oder N-substituierter Piperazin- Heterocyclus,
sowie kationische Derivate und gesättigte Derivate dieser Polymere.

Die Formel 1 umfasst alle stereo isomeren Formen der gezeigten Struktureinheiten.

In Formel 1 ist der das Ring-Glied X1 aufweisende Ring ein Ring aus der Gruppe bestehend aus Cyclopentan-, Cyclohexan- Tetrahydrofuran-, Tetrahydrothiophen-, Pyrrolidin-, N-substituierter Pyrrolidin-Ring, exocyclisch substituierter oder unsubstituierter endocyclisch gesättigter Fulven-Ring, Phospholan-Ring, P-substituierter Phospholan- Ring.

Für n=0 trägt der das Ring-Glied X1 aufweisende Ring die Substituenten S1, S2, S3, S4. Für n=1 gilt, dass X1 und X2 gleich oder verschieden sein können, und dass an den das Ring-Glied X1 tragenden Ring entweder ein 7-gliedriger Norbornenring, ein Norbornenderivat oder, im Fall dass X2 -CH₂-CH₂- bedeutet, ein 8-gliedriger Bicyclus anneliert ist. Dieser das Ring-Glied X2 aufweisende Bicyclus trägt die Substituenten S1, S2, S3, S4.

Für Formel 1 gilt, dass n=0 bevorzugt ist. Falls n=1 ist, gilt bevorzugterweise X1 = X2.

In Formel 1 sind unter den geradkettigen oder verzweigten C₁-C₂₀ Alkyl-Substituenten R1, R2, R3 zu verstehen beispielsweise Methyl, Ethyl, Propyl, Isopropyl, Butyl, Isobutyl, tert.-Butyl, Pentyl, Isopentyl, Neopentyl, Hexyl, Isohexyl, 2-Methylpentyl, Heptyl, Isoheptyl, Octyl, 2-Ethylhexyl, Nonyl, Iso-Nonyl, Decyl, 2-Propylheptyl, Undecyl, Dodecyl, 2-Butyloctyl, Tridecyl, Tetradecyl, 2-Pentylnonyl, Pentadecyl, Hexadecyl, 2-Hexyldecyl, Heptadecyl, Octadecyl, 2-Heptylundecyl, Nonadecyl, Eicosyl, 2-Octyldodecyl.

Mindestens einer der Substituenten S1, S2, S3, S4 ist -a-d, -a-b-d, -b-c-d, -a-b-c-d.

Die in den Substituenten S1, S2, S3, S4 auftretenden Teilstrukturen -a-d, -a-b-d, -b-c-d, oder -a-b-c-d weisen mit -a-, -a-b-, -b-c- oder -a-b-c- einen Spacer sowie mit -d eine endständige funktionelle Gruppe auf. Länge, Art und Substituionsmuster des Spacers können in einem großen Bereich variieren. Ebenso ist eine Variation des Substitutionsmusters der endständigen funktionellen Gruppe möglich. Dadurch lassen sich die Substituenten S1, S2, S3, S4 maßgeschneidert an unterschiedliche Anwendungszwecke anpassen. Um die Struktur von S1, S2, S3, S4 für eine bestimmte Anwendung zu optimieren, kann beispielsweise bei gegebener Struktur des Spacers eine sekundäre oder tertiäre endständige Aminogruppe mit lang- oder kurzkettigen Substituenten verwendet werden. Ebenso kann je nach Art und Struktur der endständigen Aminogruppe der Spacer eine längere oder kürzere Kettenlänge aufweisen, um einem gewünschten Anwendungszweck optimal zu entsprechen.

Unter den geradkettigen oder verzweigten C₂-C₂₀-Alkylenen der Teilstruktur a ist zu verstehen beispielsweise Ethylen, Propylen, Isopropylen, Butylen, Isobutylen, tert-Butylen, Pentylen, Isopentylen, Neopentylen, Hexylen, Isohexylen, 2-Methylpentylen, Heptylen, Isoheptylen, Octylen, 2-Ethylhexylen, Nonylen, Iso-Nonylen, Decylen, 2-Propylheptylen, Undecylen, Dodecylen, 2-Butyloctylen, Tridecylen, Tetradecylen, 2-Pentylnonylen, Pentadecylen, Hexadecylen, 2-Hexyldecylen, Heptadecylen, Octadecylen, 2-Heptylundecylen, Nonadecylen, Eicosylen, 2-Octyldodecylen.

Unter den geradkettigen oder verzweigten C₁-C₂₀-Alkylenen der Teilstruktur c ist zu verstehen beispielsweise Methylen sowie die bei Teilstruktur a genannten Alkylene. Bei den Substituenten der Alkylengruppen der Teilstrukturen a und c ist unter Halogen beispielsweise F und Cl zu verstehen. Die Alkylengruppen können teilweise oder vollständig halogeniert sein.

Unter Oxymethylen oder Polyoxymethylen der Teilstrukturen a und c ist beispielsweise zu verstehen -O-CH₂-, -O-CH₂-O-CH₂-, -O-CH₂-O-CH₂-O-CH₂-, und allgemein -(O-CH₂)ₖ-mit k = 1-20. Unter C₂-C₄-Alkylenglykol oder C₂-C₄-Polyalkylenglykol der Teilstrukturen a und c ist beispielsweise Ethylenglykol, Propylenglykol, Butylenglykol, Polyethylenglykol, Polypropylenglykol, Polybutylenglykol zu verstehen. Unter Cycloalkylenen ist in denTeilstrukturen a und c beispielsweise zu verstehen Cyclopentylen, Cyclohexylen, Cycloheptylen. Unter Aralkylen ist in den Teilstrukturen a und c beispielsweise zu verstehen Benzylen, Phenylethylen. Unter Alkylarylen ist in den Teilstrukturen a und c beispielsweise zu verstehen Nonylphenylen. Unter Arylen ist in den Teilstrukturen a und c beispielsweise zu verstehen Phenylen, Naphthylen. Unter Alkylenarylen ist in den Teilstrukturen a und c beispielsweise die Struktur -CH₂-Phenylen-, Methylenphenylen zu verstehen. Unter Arylenalkylen ist in den Teilstrukturen a und c beispielsweise die Struktur -Phenylen-CH₂-, Phenylenmethylen zu verstehen.

Die Teilstruktur b dient in den Teilstrukturen -a-b-d und -a-b-c-d als Brücke zur Verknüpfung der Spacerteile a, c oder d untereinander und in der Teilstruktur -b-c-d als Brücke zur Verknüpfung der gesamten Substituenten S1, S2, S3, S4 mit dem das Ring-Glied X1 oder X2 aufweisenden Ring der Formel 1. Dazu kommen bspw. Ester-, Ether-, Thioether-, Sulfon-, Sulfoxid-, substituierte Amino-, Kohlensäurediester-, Thiokohlensäurediester-, Harnstoff-, Thiohamstoff-, Urethan-, Thiourethan-, Guanidin-Brücken zum Einsatz, wobei die Art der Brücken je nach dem gewünschten Anwendungsgebiet des bioziden Polymers gewählt werden kann. Bei dem Substituenten R6 des Stickstoffatoms einer Aminobrücke ist unter geradkettigem oder verzweigtem C₁-C₆-Alkyl zu verstehen beispielsweise Methyl, Ethyl, Propyl, Isopropyl, Butyl, Isobutyl, tert.-Butyl, Pentyl, Isopentyl, Neopentyl, Hexyl, Isohexyl, 2-Methylpentyl, oder Neohexyl. Unter Aryl ist bei R6 beispielsweise Phenyl, Naphthyl, Toluyl, Xylyl, unter Aralkyl beispielsweise Benzyl, Phenylethyl, und unter Alkylaryl beispielsweise Nonylphenyl zu verstehen.

In der Gruppe -e(R4)R5 steht e für N oder P, wodurch mit dieser Gruppe primäre, sekundäre und tertiäre Amine und Phosphine mit umfasst werden.

Bei den Substituenten R4, R5 der Gruppe -e(R4)R5 ist zu verstehen unter geradkettigem oder verzweigtem C₁-C₂₀-Alkyl beispielsweise Methyl, Ethyl, Propyl, Isopropyl, Butyl, Isobutyl, tert.-Butyl, Pentyl, Isopentyl, Neopentyl, Hexyl, Isohexyl, 2-Methylpentyl, Heptyl, Isoheptyl, Octyl, 2-Ethylhexyl, Nonyl, Iso-Nonyl, Decyl, 2-Propylheptyl, Undecyl, Dodecyl, 2-Butyloctyl, Tridecyl, Tetradecyl, 2-Pentylnonyl, Pentadecyl, Hexadecyl, 2-Hexyldecyl, Heptadecyl, Octadecyl, 2-Heptylundecyl, Nonadecyl, Eicosyl, 2-Octyldodecyl, unter Aryl beispielsweise Phenyl, Naphthyl, Toluyl, Xylyl, unter Aralkyl beispielsweise Benzyl, Phenylethyl, und unter Alkylaryl beispielsweise Nonylphenyl, unter Cycloalkyl beispielsweise Cyclopentyl, Cyclohexyl, Cycloheptyl, und unter Heteroaryl beispielsweise Furyl, Pyrrolyl, Thiophenyl, Pyridinyl.

In den mit dem N der Gruppe -N(R4)R5 gebildeten Ringen sowie den mit dem N der Gruppe -N(R4)R5 sowie einem oder mehreren weiteren substituierten oder unsubstituierten Heteroatomen gebildeten ungesättigen Ringen kann der Stickstoff eine Doppelbindung zu einem der Substituenten R4, R5 ausbilden und somit in der Gruppe -N(R4)R5 quaterniert vorliegen, beispielsweise in einem Pyridinium-Ring. Unter den von den Resten R4 und R5 gemeinsam mit dem N der Gruppe -N(R4)R5 gebildeten Ringen sind zu verstehen der Azirin-, Aziridin-, Azet-, Dihydroazet-, Azetidin-, Pyrrol-, Pyridin-, Azepin-, Azepan-Ring.

Bei den mit dem N der Gruppe -N(R4)R5 und einem oder mehreren weiteren unsubstituierten oder substituierten Heteroatomen aus der Gruppe -O-, -S-, -NH-, -(R7)-gebildeten gesättigten oder ungesättigten Ringen handelt es sich um Imidazolidin, Pyrazol, Pyrazolidin, Dihydrothiazol, Thiazolidin, Isothiazol, Dihydroisothiazol, Isothiazolidin, Oxazol, Dihydroxazol, Oxazolidin, Isoxazol, Dihydroisoxazol, Isoxazolidin, Diazinan, Diazepin, Diazepan, bevorzugt um Oxazol-, Triazol-, Tetrazol-, Triazin-, Tetrazin-, Thiomorpholin-, Imidazol-, Thiazol-, Thiadiazol-, Pyrimidin-, Pyrazin-, Pyridazin-, Piperazin- oder N-substituierten Piperazin-Ringe.

Bei den Heterocyclen, die über einen Ring-Kohlenstoff mit den Komponenten a, b oder c des Substituenten S1 S2, S3 oder S4 verbunden sind, kann es sich beispielsweise um Pyrrolidin, Piperidin, Morpholin sowie um die gleichen Verbindungen handeln, die in den beiden vorherigen Abschnitten genannt wurden. Derartige Heterocyclen werden bevorzugterweise in Substituenten des Typs -a-d eingesetzt.

Alle in den drei vorherigen Abschnitten genannten Heterocyclen können an den Heteroatomen oder an den Ring-Kohlenstoffatomen weitere Substituenten tragen, beispielsweise C₁-C₄-Alkyle wie Ethyl, Propyl, Isopropyl, Butyl, Isobutyl, tert.-Butyl. Ein Beispiel für einen eine derartige Verbindung ist der 2,2,6,6-Tetramethyl-piperidin-4-oxyl-Rest.

Die in den vorherigen Abschnitten genannten Heterocyclen können auch Teil eines kondensierten Ringsystems sein. Beispiele für derartige Verbindungen sind Purin, Indol, Isoindol, Indazol, Dihydroindol, Dihydroisoindol, Chinolin, Isochinolin, Carbazol, Phenazin, Phenoxazin, Phenothiazin, Pterin, Pteridin, Benzazepin, sowie deren hydrierte und teilhydrierte Derivate.

Bei dem Substituenten R6 des weiteren Heteroatoms N ist zu verstehen unter geradkettigem oder verzweigtem d-C₁-C₂₀-Alkyl beispielsweise Methyl, Ethyl, Propyl, Isopropyl, Butyl, Isobutyl, tert.-Butyl, Pentyl, Isopentyl, Neopentyl, Hexyl, Isohexyl, 2-Methylpentyl, Heptyl, Isoheptyl, Octyl, 2-Ethylhexyl, Nonyl, Iso-Nonyl, Decyl, 2-Propylheptyl, Undecyl, Dodecyl, 2-Butyloctyl, Tridecyl, Tetradecyl, 2-Pentylnonyl, Pentadecyl, Hexadecyl, 2-Hexyldecyl, Heptadecyl, Octadecyl, 2-Heptylundecyl, Nonadecyl, Eicosyl, 2-Octyldodecyl, unter Aralkyl beispielsweise Benzyl, Phenylethyl, unter Alkylaryl beispielsweise Nonylphenyl und unter Cycloalkyl beispielsweise Cyclopentyl, Cyclohexyl, Cycloheptyl.

Durch Modifizierung der bioziden Polymere können kationische Derivate und gesättigte Derivate der bioziden Polymere erhalten werden.

Bei den kationischen Derivaten der bioziden Polymere kann es sich um die protonierten Verbindungen oder auch um Verbindungen mit quaterniertem Stickstoff oder Phosphor handeln. Die bei der Quaternierung angebrachten Substituenten können beispielsweise C₁-C₂₀-Alkyle wie Methyl, Ethyl, Propyl, Isopropyl, Butyl, Isobutyl, tert.-Butyl, Pentyl, Isopentyl, Neopentyl, Hexyl, Isohexyl, 2-Methylpentyl, Heptyl, Isoheptyl, Octyl, 2-Ethylhexyl, Nonyl, Iso-Nonyl, Decyl, 2-Propylheptyl, Undecyl, Dodecyl, 2-Butyloctyl, Tridecyl, Tetradecyl, 2-Pentylnonyl, Pentadecyl, Hexadecyl, 2-Hexyldecyl, Heptadecyl, Octadecyl, 2-Heptylundecyl, Nonadecyl, Eicosyl, 2-Octyldodecyl, Aryle wie beispielsweise Phenyl, Toluyl, Xylyl, Naphthyl, Aralkyle wie beispielsweise Benzyl, Phenylethyl, oder Alkylaryle wie Nonylphenyl sein. Die kationischen Derivate können beispielsweise durch polymeranaloge Reaktion mit Dialkylsulfaten, Alkylhalogeniden oder Aralkylhalogeniden hergestellt werden. Biozide Polymere können auch als Salze von Mineralsäuren wie beispielsweise HCl oder HBr oder als Salze organischer Säuren wie beispielsweise CF₃COOH vorliegen.

Die gesättigten Derivate der bioziden Polymere können erhalten werden durch Nachbehandlung der Doppelbindungen in der Polymerkette wie beispielsweise durch Hydrierung, Additionsreaktionen wie beispielsweise Epoxidierung, Chlorierung, Anlagerung von Ammoniak, vernetzende Copolymerisation mit Vinylmonomeren (z.B. Styrol, Acrylnitril) oder mit Olefinen (z.B. Buten) oder mit Acrylaten und Methacrylaten (z.B. Butylacrylat und Methylmethacrylat), Hydrosilylierung, Thiol-En-Additionsreaktion.

Im Rahmen der vorliegenden Erfindung sind unter dem Begriff Polymer auch Oligomere mit mehr als 3 Wiederholungseinheiten umfasst.

In den Copolymeren können unterschiedliche Struktureinheiten gemäß Formel 1 untereinander verknüpft sein, weiters können Struktureinheiten gemäß Formel 1 auch mit andersartigen Struktureinheiten verknüpft sein. Solche andersartigen Struktureinheiten können beispielsweise durch die Copolymerisation mit unsubstituiertem Norbornen oder substituierten Norbornenderivaten eingeführt werden.

Zur Herstellung von Pfropf-Copolymeren kann nach dem Verfahren des "grafting from" oder des "grafting to" vorgegangen werden. Beim "grafting from" beginnt die Polymerisation des betreffenden Monomeren an einem bereits vorliegenden Substrat-Polymer B, wobei dieses Substrat-Polymer B in Lösung oder in fester Form vorliegt. Beim "grafting to" wird ein bestehendes Polymer A an ein Substrat-Polymer B angekoppelt, wobei eine kovalente Bindung entsteht. Das Substrat-Polymer B kann hier in Lösung oder in fester Form vorliegen.

Eine besondere Ausführungsform des "grafting from" besteht darin, die Oberfläche des Substrat-Polymers B vorher zu aktivieren (z.B. durch ionisierende Strahlung, durch UV-Licht, durch Anbinden eines Initiators oder eines Katalysators) und dann an dieser aktivierten Oberfläche die Polymerisation des betreffenden Monomers zu starten.

Auf diese Weise können biozide Polymere an eine andere Oberfläche gekoppelt werden, wodurch diese Oberfläche eine biozide Eigenschaft erhält, ohne dass die Werkstoffe selbst in ihrer Gesamtheit modifiziert werden müssen.

Biozide Polymere können auch als Blends vorliegen, bestehend aus mehreren bioziden Polymeren nach Anspruch 1 oder aus einem oder mehreren bioziden Polymeren nach Anspruch 1 und einem oder mehreren weiteren Polymeren.

Als weitere Polymere sind beispielsweise einsetzbar Polyurethane, Polyolefine, Polyethylene, Polypropylene, Polysiloxane, Polystyrole, Poly(alpha-methylstyrole), Polyacrylate, Polymethylmethacrylate, PVC, Polyamide oder Polyterephthalate. Besonders bevorzugt sind Polyethylene, Polypropylene und PVC.

Die erfindungsgemäßen bioziden Polymere und Polymerblends können auch Additive wie beispielsweise Stabilisatoren, Verarbeitungshilfsmittel, Antistatika, Weichmacher, Nukleiermittel, Farbstoffe und Pigmente, Flammschutzmittel, Antioxidantien enthalten, weiters auch Füllstoffe und Verstärkerstoffe wie beispielsweise Nanopartikel, anorganische Fasern wie beispielsweise Glas- oder Kohlenstoff-Fasern und organische Fasern wie beispielsweise Flachs (Composites).

Zur Gewährleistung einer ausreichenden bioziden Wirkung eines Polymerblends beträgt der Anteil an biozidem Polymer im Blend 0,2-90 Gew.-%, bevorzugt 1-35 Gew.-%, besonders bevorzugt 3-10 Gew.-%, bezogen auf die Gesamtmasse des Blends. In speziellen Ausführungsformen der Erfindung kann die Mindestmenge an biozidem Polymer auch 1,5 Gew.-%, bevorzugt 5 Gew.-%, besonders bevorzugt 7 Gew.-% betragen. Die Obergrenze des Mengenanteils an biozidem Polymer kann auch Werte bis zu 40 Gew.-%, besonders bevorzugt bis zu 60 Gew.-% und ganz besonders bevorzugt bis zu 80 Gew.-% annehmen.

Als Katalysatoren für Metathesepolymerisationen werden beispielsweise homogene Katalysatoren auf Ruthenium-Carben-Komplex und Molybän-Carben-Komplex-Basis eingesetzt (Love et al., Angew. Chem., 2002, 114(21), 4207-4209).

Um eine Auswaschung der bioziden Polymere aus den aus ihnen gefertigten Produkten zu vermeiden, werden Polymerstrukturen eingesetzt, die in wässrigen Systemen möglichst unlöslich sind. Für Anwendungszwecke, bei denen eine Löslichkeit der Polymere in wässrigen Systemen erwünscht ist, kann auch eine in wässrigen Systemen lösliche Polymerstruktur gewählt werden.

Ein weiterer Gegenstand der Erfindung ist die Verwendung biozider Polymeren enthaltend wiederkehrende Struktureinheiten nach Formel 1 oder biozider Polymerblends dieser Polymere bzw. ihrer kationischen und gesättigten Derivate, bestehend aus mehreren dieser bioziden Polymere bzw. ihren kationischen und gesättigten Derivaten oder aus einem oder mehreren dieser bioziden Polymere bzw. ihrer kationischen und gesättigten Derivate und einem oder mehreren weiteren Polymeren, zur Herstellung von biozid wirksamen Erzeugnissen, Beschichtungen, Oberflächenmodifizierungen oder medizinischen oder kosmetischen Formulierungen.

Die Bedeutung der Teilstruktur a der Substituenten S1, S2, S3, S4 entspricht der Bedeutung der Teilstruktur a der Substituenten S1, S2, S3, S4 in den Formeln 1 des Anspruchs 1, wobei zusätzlich dazu auch d-Alkylen mit umfasst ist, worunter Methylen zu verstehen ist.

Die Bedeutung der Teilstrukturen b, c und d der Substituenten S1, S2, S3, S4 ist dieselbe wie die Bedeutung der Teilstrukturen b, c und d der Substituenten S1, S2, S3, S4 in den Formel 1 des Anspruchs 1.

Die biozid wirksamen Erzeugnisse können aus den bioziden Polymeren oder Polymerblends selbst, oder aus Polymermischungen, welche die bioziden Polymere oder Polymerblends enthalten, gefertigt sein.

Sie können beispielsweise Komponenten von Aufbewahrungs- und Leitungssystemen für Trink- und Brauchwasser, Folien, Fasern, Gewebe, Vliese, Maschinenteile für die Lebensmittelverarbeitung, Bauteile von Klimaanlagen, Bauteile von Zuluft- und Abluft-Systemen, Bauteile von Innnenauskleidungen von Fahrzeugen, Badezimmer- und Toilettenartikel, Küchenartikel, Komponenten von Sanitäreinrichtungen, Komponenten in Wassersystemen, Spielwaren, Lebensmittelverpackungen, Bedachungen, Tierkäfige, Bedienelemente von Geräten, medizintechnische Artikel wie Katheter, Schläuche, Folien, Handschuhe, Hauben, Pflaster, Blutbeutel oder Operationsbesteck, Hygieneartikel wie Zahnbürsten, Toilettensitze oder Kämme, und Kontaktlinsen sein. Sie können weiterhin beispielsweise Behältnisse, Lagereinrichtungen, Pumpen und Transportleitungen für Getränke und Speisen sein, wie sie beispielsweise für Anwendungen im Bereich der Lebensmittelindustrie, Getränkeindustrie und Gastronomie verwendet werden.

Sind biozid auszustattende Erzeugnisse aus anderen Materialien gefertigt, können ihnen Beschichtungen aus den bioziden Polymeren oder Polymerblends die gewünschten bioziden Eigenschaften verleihen. Unter derartigen Beschichtungen sind auch Schutzanstriche und Lackierungen zu verstehen, in denen die Polymere oder Polymerblends in dispergierter Form vorliegen.

Anwendungsbereiche für biozide Beschichtungen können z.B. sein der Sanitärbereich, bspw. Toilettenartikel, der Lebensmittelbereich, bspw. Küchenartikel, Trinkwassersysteme, Kosmetik- oder Spielwaren, der häusliche Bereich, bspw. Holzschutz oder Bedachungen, Kühlschrank-, Spül- oder Waschmaschinenteile, der marine Bereich, bspw. Schiffsrümpfe, Hafenanlagen, Ballastwassertanks oder Bohrplattformen, der Maschinenbau, bspw. Klimaanlagen, Ionentauscher, Bioreaktoren oder Brauchwasseranlagen, der medizintechnische Bereich, bspw. Implantate, Kontaktlinsen oder Membranen, oder der Gebrauchsartikelbereich, bspw. Kleidung, Teppichböden, Türgriffe oder Krankenhauseinrichtungen. Biozide Beschichtungen können auch auf Papier und Verpackungsmaterialien wie beispielsweise Karton aufgebracht werden.

Die Anwendungsbereiche für biozide Beschichtungen und biozide Erzeugnisse entsprechen einander größtenteils.

Die bioziden Polymere bzw. Polymerblends können weiters als Additive zu kosmetischen oder medizinischen Formulierungen zugesetzt werden, um beispielsweise biozid wirksame Salben oder Pasten zu erhalten.

Als Zusatz in dispergierter Form oder gelöst können die bioziden Polymere bzw. Polymerblends zur Desinfizierung, Entkeimung und Verhinderung von Biofouling in geschlossenen oder offenen Brauchwasser- und Kühlwassersystemen eingesetzt werden. Die dispergierten Polymere und Polymerblends lassen sich durch Abfiltrieren aus den Systemen entfernen.

### Beispiele:

### Beispiel 1

### Herstellung der Monomeren 1 - 4

### Monomer 1

Exo,endo-Bicyclo[2.2.1]hept-5-en-2-carbonsäure 2-(tert.-butylamino)-ethyl ester.

0,160 mol Acrylsäurechlorid (Fa. Lancaster) wurde in 30 ml Dichlormethan verdünnt vorgelegt. 0,320 mol frisch gecracktes Cyclopentadien (bp = 41 °C) wurde unter Rühren langsam im Eisbad zugetropft. Nach vollendetem Zutropfen ließ man die Reaktionslösung 14 h bei Raumtemperatur rühren. Der erhaltenen Reaktionslösung von exo,endo-Bicyclo[2.2.1]hept-5-en-2-carboylchlorid wurde eine Lösung von 0,144 mol 2-tert-Butylaminoethanol (Fa. Aldrich) in 30 ml Dichlormethan langsam unter Rühren im Eisbad zugetropft. Nach vollendetem Zutropfen wurde die Reaktionslösung 24 h bei Raumtemperatur gerührt. Das Lösungsmittel wurde im Vakuum abgezogen. Der hellgelbe Rückstand wurde in Chloroform/n-Heptan umgefällt. Umkristallisation in Aceton ergab einen weißen Feststoff (Hydrochlorid). Dieses Zwischenprodukt wurde in 300 ml Chloroform gelöst, 0,144 mol Na₂CO₃ H₂O zugegeben und die Suspension 3 h bei Raumtemperatur gerührt. Danach wurde mit 150 ml destilliertem Wasser extrahiert. Der pH-Wert der wässrigen Phase betrug 8. Die organische Phase wurde über Na₂SO₄ getrocknet und das Lösungsmittel im Vakuum entfernt. Man erhielt das Produkt als ölige Flüssigkeit in einer Ausbeute von 52 %.
NMR (¹H, 500MHz, CDCl3, ppm): 6.18, 5.92 (CH=CH im Ring), 2.77 (CH₂-NHR) FTIR (Film auf CaF2, cm ¹) : 3323 (R₂NH), 3062 (=CH- im Ring), 1735 (C=O).

### Monomer 2

(+/-) exo,endo-Bicyclo[2.2.1]hept-5-en-2,3-dicarbonsäure bis 2-(tert-butylamino)-ethylester.

0,1 14 mol Fumarsäurechlorid (Fa. Lancaster) wurde in 30 ml Dichlormethan verdünnt vorgelegt. 0,228 mol frisch gecracktes Cyclopentadien (bp =41 °C) wurde unter Rühren langsam im Eisbad zugetropft. Nach vollendetem Zutropfen ließ man die Reaktionslösung 24 h bei Raumtemperatur rühren. Der erhaltenen Reaktionslösung von (+/-) exo,endo-Bicyclo[2.2.1]hept-5-en-2,3-dicarboyldichlorid wurde eine Lösung von 0,210 mol 2-tert-Butylaminoethanol (Fa. Aldrich) in 200 ml CH₂Cl₂ langsam unter Rühren im Eisbad zugetropft. Nach vollendetem Zutropfen wurde die Reaktionslösung 24 h bei Raumtemperatur gerührt. Das Lösungsmittel wurde im Vakuum abgezogen. Der weiße Feststoff wurde mit n-Heptan extrahiert. Dieses Zwischenprodukt wurde in 600 ml Chloroform suspendiert, 0,210 mol Na₂CO₃ H₂O zugegeben und die Suspension 3 h bei Raumtemperatur gerührt. Danach wurde mit 300 ml destilliertem Wasser extrahiert. Der pH-Wert der wässrigen Phase betrug 9. Die organische Phase wurde über Na₂SO₄ getrocknet und das Lösungsmittel im Vakuum entfernt. Man erhielt das Produkt als ölige Flüssigkeit in einer Ausbeute von 61 %.
NMR (1 H, 500 MHz, CDCl3): 6.26, 6.04 (CH=CH im Ring), 2.78, 2.75 (CH₂-NHR) FTIR (Film auf CaF2, cm ¹): 3323 (R₂NH), 3063 (=CH- im Ring), 1731 (C=O).

Auf analoge Weise wurden folgende Verbindungen erhalten:

### Monomer 3

Exo, endo-Bicyclo[2.2.1]hept-5-en-2-carbonsäure 2-(dimethylamino)-ethylester.
NMR (¹H, 500MHz, CDCl3, ppm): 6.18, 5.92 (CH=CH im Ring), 2.53 (CH₂-NR₂) FTIR (Film auf CaF2, cm ¹): 3063 (=CH- im Ring), 1735 (C=O).

### Monomer 4

(+/-) exo, endo-Bicyclo[2.2.1]hept-5-en-2,3-dicarbonsäure bis 2-(dimethylamino)-ethylester.
NMR (1 H, 500 MHz, CDCl3): 6.23, 6.03 (CH=CH im Ring), 2.54, 2.50 (CH₂-NR₂) FTIR (Film auf CaF2, cm ¹): 3065 (=CH- im Ring), 1732 (C=O).

Ebenso können folgende Ester erhalten werden:
Exo,endo-Bicyclo[2.2.1]hept-5-en-2-carbonsäure 2-(butylamino)-ethylester
Exo,endo-Bicyclo[2.2.1]hept-5-en-2-carbonsäure 3-(dimethylamino)-phenylester
Exo,endo-Bicyclo[2.2.1]hept-5-en-2-carbonsäure 2-[4-(dimethylamino)phenyl]-ethylester
Exo,endo-Bicyclo[2.2.1]hept-5-en-2-carbonsäure 2-(1-piperazino) ethylester
Exo,endo-Bicyclo[2.2.1]hept-5-en-2-carbonsäure 2-pyridylester
Exo,endo-Bicyclo[2.2.1]hept-5-en-2-carbonsäure 3-pyridylester
Exo,endo-Bicyclo[2.2.1]hept-5-en-2-carbonsäure 4-pyridylester
Exo,endo-Bicyclo[2.2.1]hept-5-en-2-carbonsäure 2-piperidylester
Exo,endo-Bicyclo[2.2.1]hept-5-en-2-carbonsäure 3-piperidylester
Exo,endo-Bicyclo[2.2.1]hept-5-en-2-carbonsäure 4-piperidylester
Exo,endo-Bicyclo[2.2.1]hept-5-en-2-carbonsäure 2-(3-indolyl)-ethylester
Exo,endo-Bicyclo[2.2.1]hept-5-en-2-carbonsäure 4- (2,2,6,6-tetramethyl)-piperidylester
(+/-)exo,endo-Bicylo[2.2.1]hept-5-en-2,3-dicarbonsäure bis 2-(isopropylamino)-ethylester
(+/-)exo,endo-Bicylo[2.2.1]hept-5-en-2,3-dicarbonsäure bis 2-(diisopropylamino)-ethylester
(+/-)exo,endo-Bicylo[2.2.1]hept-5-en-2,3-dicarbonsäure bis 3-(dimethylamino)-1 - propylester
(+/-)exo,endo-Bicylo[2.2.1]hept-5-en-2,3-dicarbonsäure bis 4-(dimethylamino)-1 - butylester
(+/-)exo,endo-Bicylo[2.2.1]hept-5-en-2,3-dicarbonsäure bis 2-(isopropylamino)-ethylester
(+/-)exo,endo-Bicylo[2.2.1]hept-5-en-2,3-dicarbonsäure bis 2-(butylamino)-ethylester
(+/-)exo,endo-Bicylo[2.2.1]hept-5-en-2,3-dicarbonsäure bis 3-(dimethylamino)-phenylester
(+/-)exo,endo-Bicylo[2.2.1]hept-5-en-2,3-dicarbonsäure bis 2-[4-(dimethylamino) phenyl]-ethylester
(+/-)exo,endo-Bicylo[2.2.1]hept-5-en-2,3-dicarbonsäure bis 2-(1-piperazino)-ethylester
(+/-)exo,endo-Bicylo[2.2.1]hept-5-en-2,3-dicarbonsäure bis 2-pyridylester
(+/-)exo,endo-Bicylo[2.2.1]hept-5-en-2,3-dicarbonsäure bis 3-pyridylester
(+/-)exo,endo-Bicylo[2.2.1]hept-5-en-2,3-dicarbonsäure bis 4-pyridylester
(+/-)exo,endo-Bicylo[2.2.1]hept-5-en-2,3-dicarbonsäure bis 2-piperidylester
(+/-)exo,endo-Bicylo[2.2.1]hept-5-en-2,3-dicarbonsäure bis 3-piperidylester
(+/-)exo,endo-Bicylo[2.2.1]hept-5-en-2,3-dicarbonsäure bis 4-piperidylester
(+/-)exo,endo-Bicylo[2.2.1]hept-5-en-2,3-dicarbonsäure bis 2-(3-indolyl)-ethylester
(+/-)exo,endo-Bicylo[2.2.1]hept-5-en-2,3-dicarbonsäure bis 4-(2,2,6,6-tetramethyl)-piperidylester

### Beispiel 2

### Herstellung der Polymere 1 - 4 mittels ROMP

300 Äquivalente Monomer werden in 6 ml absolutiertem (wasserfreiem) Dichlormethan gelöst und unter Sauerstoffausschluss in ein Argon-gefülltes Schlenkgefäß gefüllt. Dieser Lösung wird als Katalysator 1 Äquivalent "Bispyridin Complex 6" (Love et al., Angew. Chem., 2002, 114(21), 4207-4209), gelöst in 5 ml absolutiertem Dichlormethan, unter Rühren zugegeben und die Reaktionsmischung 24 h bei Raumtemperatur unter Ausschluss von Feuchtigkeit und Sauerstoff gerührt. Dann wird die Reaktion durch Zugabe von 5 Tropfen Ethylvinylether abgebrochen. Die Reaktionslösung wird im Vakuum eingeengt. Das entstandene Polymer wird in n-Pentan ausgefällt und anschließend im Vakuum getrocknet.

### Polymerisation von Monomer 1 zu Polymer 1

Poly (bicyclo[2.2.1]hept-5-en-2-carbonsäure 2-(tert.-butylamino)-ethylester) Ausbeute 82 %.
NMR (1H, 500 MHz, CDCl3): 5.33 (CH=CH in Hauptkette), 2.77 (CH₂-NHR) FTIR (Film auf CaF2, cm ¹): 3323 (R₂NH), 971 (=CH- in Hauptkette), 1729 (C=O)

### Polymerisation von Monomer 2 zu Polymer 2

Poly (bicyclo[2.2.1]hept-5-en-2,3-dicarbonsäure bis 2-(tert-butylamino)-ethylester) Ausbeute 23 %.
NMR (1 H, 500 MHz, CDCl3): 5.39, 5.22 (CH=CH in Hauptkette), 2.79 (CH₂-NHR) FTIR (Film auf CaF2, cm ¹): 3308 (R2NH), 975 (=CH- in Hauptkette), 1729 (C=O)

### Polymerisation von Monomer 3 zu Polymer 3

Poly (bicyclo[2.2.1]hept-5-en-2-carbonsäure 2-(dimethylamino)-ethyl ester) Ausbeute 68 %.
NMR (1 H, 500 MHz, CDCl3): 5.31 (CH=CH in Hauptkette), 2.55 (CH₂-NR₂) FTIR (Film auf CaF2, cm ¹): 2821, 2770 (N-CH₃), 969 (=CH- in Hauptkette), 1730 (C=O)

### Polymerisation von Monomer 4 zu Polymer 4

Poly (bicyclo[2.2.1]hept-5-en-2,3-dicarbonsäure bis 2-(dimethylamino)-ethylester) Ausbeute 61 %.
NMR (1 H, 500 MHz, CDCl3): 5.39 (CH=CH in Hauptkette), 2.55 (CH₂-NR₂) FTIR (Film auf CaF2, cm ¹): 2821, 2770 (N-CH₃), 970 (=CH- in Hauptkette), 1729 (C=O)

Auf analoge Weise können folgende Polymere erhalten werden:
Poly (bicyclo[2.2.1]hept-5-en-2-carbonsäure 2-(diethylamino)-ethylester)
Poly (bicyclo[2.2.1]hept-5-en-2-carbonsäure 2-(isopropylamino)-ethylester)
Poly (bicyclo[2.2.1]hept-5-en-2-carbonsäure 2-(diisopropylamino)-ethylester)
Poly (bicyclo[2.2.1]hept-5-en-2-carbonsäure 3-(dimethylamino)-1-propylester)
Poly (bicyclo[2.2.1]hept-5-en-2-carbonsäure 1-(dimethylamino)-2-propylester)
Poly (bicyclo[2.2.1]hept-5-en-2-carbonsäure 4-(dimethylamino)-1-butylester)
Poly (bicyclo[2.2.1]hept-5-en-2-carbonsäure 2-(butylamino)-ethylester)
Poly (bicyclo[2.2.1]hept-5-en-2-carbonsäure 3-(dimethylamino)-phenylester)
Poly (bicyclo[2.2.1]hept-5-en-2-carbonsäure 2-[4-(dimethylamino)phenyl]-ethylester)
Poly (bicyclo[2.2.1]hept-5-en-2-carbonsäure 2-(4-morpholino) ethylester)
Poly (bicyclo[2.2.1]hept-5-en-2-carbonsäure 2-(1-piperazino) ethylester)
Poly (bicyclo[2.2.1]hept-5-en-2-carbonsäure 2-pyridylester)
Poly (bicyclo[2.2.1]hept-5-en-2-carbonsäure 3-pyridylester)
Poly (bicyclo[2.2.1]hept-5-en-2-carbonsäure 4-pyridylester)
Poly (bicyclo[2.2.1]hept-5-en-2-carbonsäure 2-piperidylester)
Poly (bicyclo[2.2.1]hept-5-en-2-carbonsäure 3-piperidylester)
Poly (bicyclo[2.2.1]hept-5-en-2-carbonsäure 4-piperidylester)
Poly (bicyclo[2.2.1]hept-5-en-2-carbonsäure 2-(3-indolyl)-ethylester)
Poly (bicyclo[2.2.1]hept-5-en-2-carbonsäure 4-(2,2,6,6-tetramethyl)-piperidylester)
Poly (bicylo[2.2.1]hept-5-en-2,3-dicarbonsäure bis 2-(diethylamino)-ethylester)
Poly (bicylo[2.2.1]hept-5-en-2,3-dicarbonsäure bis 2-(isopropylamino)-ethylester)
Poly (bicylo[2.2.1]hept-5-en-2,3-dicarbonsäure bis 2-(diisopropylamino)-ethylester)
Poly (bicylo[2.2.1]hept-5-en-2,3-dicarbonsäure bis 3-(dimethylamino)-1-propylester)
Poly (bicylo[2.2.1]hept-5-en-2,3-dicarbonsäure bis 1-(dimethylamino)-2-propylester)
Poly (bicylo[2.2.1]hept-5-en-2,3-dicarbonsäure bis 4-(dimethylamino)-1-butylester)
Poly (bicylo[2.2.1]hept-5-en-2,3-dicarbonsäure bis 2-(isopropylamino)-ethylester)
Poly (bicylo[2.2.1]hept-5-en-2,3-dicarbonsäure bis 2-(butylamino)-ethylester)
Poly (bicylo[2.2.1]hept-5-en-2,3-dicarbonsäure bis 3-(dimethylamino)-phenylester)
Poly (bicylo[2.2.1]hept-5-en-2,3-dicarbonsäure bis 2-[4-(dimethylamino) phenyl]-ethylester)
Poly (bicylo[2.2.1]hept-5-en-2,3-dicarbonsäure bis 2-(4-morpholino) ethylester)
Poly (bicylo[2.2.1]hept-5-en-2,3-dicarbonsäure bis 2-(1-piperazino) ethylester)
Poly (bicylo[2.2.1]hept-5-en-2,3-dicarbonsäure bis 2-pyridylester)
Poly (bicylo[2.2.1]hept-5-en-2,3-dicarbonsäure bis 3-pyridylester)
Poly (bicylo[2.2.1]hept-5-en-2,3-dicarbonsäure bis 4-pyridylester)
Poly (bicylo[2.2.1]hept-5-en-2,3-dicarbonsäure bis 2-piperidylester)
Poly (bicylo[2.2.1]hept-5-en-2,3-dicarbonsäure bis 3-piperidylester)
Poly (bicylo[2.2.1]hept-5-en-2,3-dicarbonsäure bis 4-piperidylester)
Poly (bicylo[2.2.1]hept-5-en-2,3-dicarbonsäure bis 2-(3-indolyl)-ethylester)
Poly (bicylo[2.2.1]hept-5-en-2,3-dicarbonsäure bis 4-(2,2,6,6-tetramethyl)-piperidylester)

### Beispiel 3

Katalytische Pfropfung (Grafting) der Monomere 1, 2, 3 und 4 auf EPDM-Kautschuk mittels ROMP

Vorbereitend wird das Basispolymer EPDM-Kautschuk (Dutral TER 4049; EPDM-Terpolymer aus 55 % Ethylen, 40 % Propylen und 5 % Ethylidennorbomen) in Toluol gelöst und in Methanol mit 0,1 Gewichtsprozent 3,5-Di-tert-butyl-4-hydroxytoluol als Stabilisator umgefällt.

0,2 g gereinigtes EPDM und 0,004g 2-Hydroxy-2-methyl-1-phenyl-1-propanon (Photoinitiator von Fa. Ciba) wird in 10 ml Toluol gelöst. Diese Lösung wird mittels Rotationsbeschichtung auf ein CaF₂-Plättchen aufgebracht (Spincoater RC5 der Firma Karl Suess, Rotationsgeschwindigkeit 1000 rpm, Rotationsdauer 45 s, Rotationsbeschleunigung 1000 rpm/s) und unter Stickstoffatmosphäre 15 Minuten mit einer Quecksilberdampflampe bestrahlt. Alle weiteren Reaktionsschritte erfolgen unter Schutzgasatmosphäre. Der erhaltene Probekörper wird in einen Rundkolben eingelegt, welcher 3 ml einer 0,0015 molaren Lösung des Katalysators "Bispyridin Complex 6" (Love et al., Angew. Chem., 2002, 114(21), 4207-4209) in absolutiertem Aceton enthält. Nach 2 h bei 40 °C wird der Probekörper entnommen und mit absolutiertem Aceton gespült. Der Probekörper wird nun in einen Rundkolben überführt, der 3 ml einer 0,375 molaren Lösung eines der Monomeren 1 - 4 in absolutiertem Aceton enthält. Nach 24 h Reaktion bei 40 °C (Ausschluss von Sauerstoff und Feuchtigkeit) wird die Reaktion durch Zugabe von 5 Tropfen Ethylvinylether gestoppt, und die Probekörper werden entnommen, mehrmals mit Aceton gespült und bei 80 °C getrocknet.

### Charakterisierung der Pfropf-Copolymeren 1, 2, 3 und 4

Charakteristische FTIR-Banden:
Pfropf-Copolymer 1 (gewonnen aus Monomer 1) : 1729 cm⁻¹
Pfropf-Copolymer 2 (gewonnen aus Monomer 2): 1731 cm⁻¹
Pfropf-Copolymer 3 (gewonnen aus Monomer 3): 1729 cm⁻¹
Pfropf-Copolymer 4 (gewonnen aus Monomer 4): 1732 cm⁻¹

### Beispiel 4

Herstellung eines Compounds aus Polyethylen und Polymer 3 0,2g von Polymer 3 wurden mit 3,8g Polyethylen (HDPE; High Density Polyethylen) mithilfe eines Labor-Compounders (HAAKE Minilab Micro-Compounder) zu Mischungen verarbeitet. Die Compoundierung erfolgte in zwei Stufen (Stufe 1 und Stufe 2), anschließend wurde ein Strang extrudiert. Die Verarbeitungsbedingungen sind der Tabelle 1 zu entnehmen.

**Tabelle 1**

| | Stufe 1 | Stufe 2 | Strangextrusion |
|---|---|---|---|
| Zeit[min] | 2 | 1 | 1,5 |
| Orehzahl[rpm] | 45 | 35 | 55 |
| Massetemperatur[°C] | 190 | 190 | 190 |

Der erhaltene Polymerstrang wurde mittels einer Vakuumplattenpresse Collin P 200 PV zu Testplatten der Größe 40 x40 x 1 mm umgeformt. Das Temperaturprogramm der Polymerumformung ist Tabelle 2 zu entnehmen.

**Tabelle 2**

| Temperatur [°C] | 170 | 170 | 170 | 170 | 40 |
|---|---|---|---|---|---|
| Zeit [min] | 2 | 2 | 5 | 5 | 15 |
| Druck [bar] | 2 | 10 | 50 | 100 | 100 |

### Beispiel 5

### Charakterisierung der Oberflächen der Polymere 1, 2, 3, 4 und der Pfropf- Copolymere 1, 2, 3, 4

Die Glasübergangstemperaturen (Tg) der Polymere 1, 2, 3 und 4 wurden mit einem DSC- Kalorimeter Pyris Diamond DSC (Perkin Eimer) bestimmt (je 5 mg Probe; 2 Heizläufe von -50 °C bis +150 °C; Heizrate von 20 °C/min; Kühlrate 10 °C/min). Die Glasübergangstemperaturen (Tg) wurden im 1. Kühllauf und im 2. Heizlauf bestimmt, es wird jeweils der midpoint angegeben (siehe Tabelle 3).

Die thermische Beständigkeit der Polymere wurde mit einer Thermogravimerie-Anlage (STA 625 der Firma Rheometrics Ltd.) geprüft (je 5 mg Probe; Stickstoffatmosphäre mit 35 ml/min Stickstoffstrom; Heizrate 10 °C/min; Proben von Raumtemperatur bis auf 500 °C erhitzt). Aus der Gewichtsänderung mit der Temperatur wurde der Beginn des thermischen Abbaus der Polymere ermittelt und in °C angegeben (siehe Tabelle 3).

**Tabelle 3**

| Polymer | T_{g} [°C] 1. Köhllauf | T_{g} [°C] 2. Heizlauf | Zersetzungstemperatur [°C] |
|---|---|---|---|
| 1 | 31 | 33 | 211 |
| 2 | 33 | 33 | 358 |
| 3 | 6 | 8 | 221 |
| 4 | -19 | -16 | 223 |

Filme der Polymere 1, 2, 3 und 4 wurden auf Glasoberflächen durch Rotationsbeschichtung aus Chloroform-Lösung erzeugt. Der Kontaktwinkel (Prüfflüssigkeiten: Wasser und α- Bromnaphthalin) wurde nach der Methode des liegenden Tropfens (sessile drop) unter Verwendung eines Drop Shape Analysis System DSA100 (Fa. Krüss) bestimmt (Prüfung bei 20 - 25 °C; Tropfenvolumen: -20 µL; Ablesung nach 1 s) bestimmt. Aus den Kontaktwinkeldaten wurden die Oberflächenenergien (γₛ, γₛ^{d} und γₛ^{p}, in mJ/m²) nach Owens und Wendt (J. Appl. Polymer Sci., 1969, 13, 1741 ff.) errechnet.

Der isolektrische Punkt der Polymere (als Filme auf Glasplatten vorliegend) wurde durch Strömungspotentialmessungen (Electrokinetic Analyzer EKA von Fa. Anton Paar; Klammerzelle mit PMMA-Gegenplatte; 0,001 molare KCl Elektrolytlösung) bestimmt, die Auswertung der Daten erfolgte nach Fairbrother und Mastin (J. Chem. Soc. 1924, 75, 2318 ff.) (siehe Tabelle 4).

**Tabelle 4**

| Polymer | Iso elektrischer Punkt [pH] | Kontaktwinkel [°] H₂O | Kontaktwinkel [°] α-Bromnaphtalin | γₛ [mJ/m²] | γₛ^{d} [mJ/m²] | γₛ^{p} [mJ/m²] |
|---|---|---|---|---|---|---|
| 1 | 7,50 | 78 | 38,3 | 40,63 | 35,50 | 5,13 |
| 2 | 6,79 | 4,3 | 51,9 | 30,53 | 29,13 | 1,40 |
| 3 | 7,76 | 89,2 | 37,2 | 37,53 | 35,97 | 1,56 |
| 4 | 7,62 | 74,4 | 50,5 | 38,25 | 29,84 | 8,41 |

Die Pfropf-Copolymere 1, 2, 3 und 4 besitzen folgende Oberflächen-Eigenschaften, die wie oben beschrieben ermittelt und mit gereinigten EPDM-Oberflächen verglichen wurden (siehe Tabelle 5):

**Tabelle 5**

| Polymer | Kontaktwinkel [°] H₂O | Kontaktwinkel [°] α-Bromnaphtalin | γₛ [mJ/m²] | γₛ^{d} [mJ/m²] | γₛ^{p} [mJ/m²] |
|---|---|---|---|---|---|
| EPDM | 108,3 | 60,4 | 24,96 | 24,91 | 0,05 |
| Pfropf-Copolymer 1 | 83,5 | 24,3 | 42,98 | 40,73 | 2,25 |
| Pfropf-Copolymer 2 | 96.5 | 43,3 | 33,84 | 33,28 | 0,56 |
| Pfropf-Copolymer 3 | 88,4 | 49,2 | 33,14 | 30,48 | 2,66 |
| Pfropf-Copolymer 4 | 98,8 | 55,1 | 28,37 | 27,58 | 0,79 |

### Beispiel 6

### Bestimmung der antimikrobiellen Wirksamkeit der Polymere 1, 2, 3, 4, des Pfropf-Copolvmers 3 und des Compounds aus Polvethylen und Polymer 3

### Bestimmung der antimikrobiellen Wirksamkeit der Polymere 1, 2, 3, 4

Zur mikrobiologischen Prüfung wurden 1 %ige Lösungen der Polymere 1, 2, 3 und 4 in Chloroform hergestellt. Aus diesen Lösungen wurden Polymerfilme auf 40 x 40 mm große Glasplättchen aufgebracht (Rotationsbeschichtung). An diesen Plättchen wurde mit den Testkeimen Staphylococcus aureus (DSM 346) und Escherichia coli (DSM 787) gemäß dem japanischen Industriestandard JIS Z 2801 :2000 die antimikrobielle Aktivität der Polymere 1, 2, 3, und 4 geprüft. Als Vergleichsproben wurden Plättchen aus LLDPE (Dowlex 2388; Linear Low Density Polyethylen (enthaltend 1-Octen)) geprüft.

Die Lebendkeimzahlen KBE/ml (Kolonienbildende Einheiten pro Milliliter) wurden direkt nach dem Impfen (Start) bzw. nach 24 Stunden Inkubation für die Polymere 1, 2, 3 und 4 und für die Vergleichsprobe LLDPE bestimmt (siehe Tabelle 6).

**Tabelle 6**

| | Staphylococcus aureus | Escherichia coli |
|---|---|---|
| Start [KBE/ml] | 1,1·10⁵ | 1,15·10⁵ |
| Vergleichssprobe LLDPE [KBE/ml] | 8,9·10⁶ | 8,5·10⁶ |
| Polymer 1 [KBE/ml] | 0 | 0 |
| Polymer 2 [KBE/ml] | 50 | 0 |
| Polymer 3 [KBE/ml] | 0 | 0 |
| Polymer 4 [KBE/ml] | 0 | 2000 |

### Bestimmung der antimikrobiellen Wirksamkeit des Pfropf-Copolymers 3

Zur mikrobiologische Prüfung des Propf-Copolymers 3 wurde ein 40 x 40 mm große Glas- Plättchen mit EPDM-Kautschuk (Dutral TER 4049; EPDM-Terpolymer aus 55 % Ethylen, 40 % Propylen und 5 % Ethylidennorbomen) beschichtet. Der EPDM-Film wurde unter UV-Strahlung mit 2-Hydroxy-2-methyl-1-phenyl-1-propanon (Photoinitiator von Fa. Ciba) vernetzt, wie in Beispiel 6 beschrieben, vernetzt. Dieser Probekörper wurde in 80 ml einer 0,0015 molaren Lösung des Katalysators "Bispyridin Complex 6" in absolutiertem Aceton eingelegt und der dicht verschlossene Reaktionsansatz unter Schutzgasatmosphäre für 2 h auf 40 °C erhitzt. Danach wurde der Probekörper entnommen und unter Stickstoffatmosphäre zur Entfernung nicht gebundenen Initiators mit Aceton gewaschen. Der derart behandelte Probekörper wurde in einen Laborautoklaven überführt, der 80 ml einer 0,375 molaren Lösung eines des Monomeren 3 in absolutiertem Aceton enthält. Das verschlossene Reaktionsgefäß wurde für 24 h auf 40 °C erhitzt (Ausschluss von Sauerstoff und Feuchtigkeit). Dann wurde die Reaktion durch Zugabe von ca. 1 ml Ethylvinylether gestoppt, der Probekörper entnommen und zur Entfernung von restlichem Monomer und von Homopolymer mehrmals mit Aceton gespült, und bei 80 °C getrocknet. Die Charakterisierung des Produktes erfolgte mittels NMR, FTIR, UV.

An den derart behandelten Probekörpern wurde mit den Testkeimen Staphylococcus aureus (DSM 346) und Escherichia coli (DSM 787) gemäß dem japanischen Industriestandard JIS Z 2801:2000 die antimikrobielle Aktivität des Pfropfcopolymers 3 geprüft. Als Vergleichsproben wurden Plättchen aus LLDPE (Dowlex 2388; Linear Low Density Polyethylen (enthaltend 1-Octen)) geprüft.

Die Lebendkeimzahlen KBE/ml (Kolonienbildende Einheiten pro Milliliter) wurden direkt nach dem Impfen (Start) bzw. nach 24 Stunden Inkubation für das Pfropf-Copolymer 3 und für die Vergleichsprobe LLDPE bestimmt (siehe Tabelle 7).

**Tabelle 7**

| | Staphylococcus aureus | Escherichia coli |
|---|---|---|
| Start [KBE/ml] | 3,5·10⁵ | 3,9·10⁵ |
| Vergleichsprobe LLDPE [KBE/ml] | 5,64·10⁶ | 7,56·10⁶ |
| Pfropf-Polymer 3 [KBE/ml] | 4,20·10⁴ | 5,10·10⁴ |

### Bestimmung der antimikrobiellen Wirksamkeit des Compounds aus Polyethylen und Polymer 3

Die gemäß Beispiel 4 erzeugten Testplatten, enthaltend 5 Gewichtsprozent Polymer 3 in HDPE, wurden gemäß dem japanische Industriestandard JIS Z 2801:2000 gegenüber den Bakterien Staphylococcus aureus (DSM 346) und Escherichia coli (DSM 787) auf antimikrobielle Aktivität geprüft. Als Vergleichsprobe wurden Platten aus reinem HPDE geprüft.

Die Lebendkeimzahlen KBE/ml (Kolonienbildende Einheiten pro Milliliter) wurden direkt nach dem Impfen (Start) bzw. nach 24 Stunden Inkubation für den HDPE / Polymer 3 Compound und für die Vergleichsprobe (reines HDPE) bestimmt (siehe Tabelle 8).

**Tabelle 8**

| | Staphylococcus aureus | Escherichia coli |
|---|---|---|
| Start [KBE/ml] | 3,5·10⁵ | 3,9·10⁵ |
| Vergleichsprobe HDPE [KBE/ml] | 5,64·10⁶ | 7,56·10⁶ |
| Compound [KBE/ml] | 3,00·10⁴ | 3,78·10⁶ |

### Beispiel 7

### Herstellung des Monomers 5

### [4-(exo,endo-Bicyclo[2.2.1]hept-5-en-2-yl)-benzyl]-[2-(dimethylamino)ethyl]ether

100 mmol 4-Vinylbenzylchlorid (Fa. Fluka), 200 mmol frisch gecracktes Cyclopentadien (bp = 41 °C) und 10 mmol BHT (2,6-di-tert.butyl-4-methylphenol; Stabilisator)) werden in einem Reaktionskolben, der mit einem Kühlaufsatz (Rückflusskühler) ausgerüstet ist, unter Rühren vermischt und unter Rückfluss erhitzt. Zum Erhitzen wird ein Ölbad mit einer Temperatur von 185 °C verwendet. Die Reaktionsdauer beträgt 12 Stunden. Nach Abkühlung wird das rohe Reaktionsprodukt im Vakuum (< 1 mbar) destilliert. Bei einer Siedetemperatur im Bereich 90 bis 100 °C wird das Produkt als fast farblose Flüssigkeit erhalten. Das destillativ gewonnene Produkt wird durch Säulenchromatographie (Kieselgel als stationäre Phase, Eluens Cyclohexan/Essigester im Volumsverhältnis 50/1) weiter gereinigt. Man erhält das gereinigte Zwischenprodukt 4-(exo,endo-Bicyclo[2.2.1]hept-5-en-2-yl)-benzylchlorid (auch als 5-(4-Chloromethyl-phenyl)-bicyclo[2.2.1]hept-2-en bezeichnet) in einer Ausbeute von 11 mmol (11 % der Theorie).

Analysendaten für 4-(exo,endo-Bicyclo[2.2.1]hept-5-en-2-yl)-benzylchlorid:
NMR (1 H, 500 MHz, CDCl₃): 7.27, 7.25, 7.15, 7.14 (aromatische C-H), 6.27, 5.80 (CH=CH im Ring), 4.59, 4.57 (Phenyl-CH₂-Cl).
FTIR (Film auf CaF₂, cm ¹): 1265 (Benzylchlorid-Gruppe), 1614, 1513 (Aromat), 3057(=CH- im Ring)

Im nächsten Reaktionsschritt wird wie folgt vorgegangen:
es werden 4,5 mmol 2-Dimethylamino-ethanol unter Schutzgasatmosphäre in 10 Milliliter absolutem (wasserfreiem) Dimethylformamid gelöst. Dann werden bei Raumtemperatur 7,2 mmol Natriumhydrid (in Form einer 60 % Dispersion in Mineralöl) unter Rühren zugegeben. Nach 30 min werden 5 mmol des Zwischenproduktes 4-(exo,endo-Bicyclo[2.2.1]hept-5-en-2-yl)-benzylchlorid, gelöst in 10 Milliliter Dimethylformamid, innerhalb eines Zeitraumes von 10 min unter Schutzgasatmosphäre zugetropft. Anschließend wird die Reaktionsmischung unter Rühren 12 Stunden lang auf 60 °C erhitzt. Nach Beendigung der Reaktion werden 50 Milliliter Wasser zugegeben, dann werden 2 g Natriumhydrogencarbonat (als Pulver) zugegeben. Diese Mischung wird mit 100 Milliliter Dichlormethan extrahiert. Der Dichlormethan-Extrakt wird mit wässriger Natriumhydrogencarbonat-Lösung (2 g in 50 Milliliter Wasser) gewaschen und anschließend über Natriumsulfat getrocknet. Das Lösungsmittel wird dann bei einer Temperatur von 80 °C im Vakuum abgezogen. Der verbleibende Rückstand wird in 20 Milliliter n-Heptan aufgenommen und durch Filtration von unlöslichen Anteilen befreit. In die Heptan-Lösung wird gasförmiger Chlorwasserstoff eingeleitet, was zur Bildung eines weißen Niederschlages führt. Dieser Niederschlag stellt das Hydrochlorid von [4-(exo,endo-Bicyclo[2.2.1]hept-5-en-2-yl)-benzyl]-[2-(dimethylamino)ethyl]ether dar. Dieser Niederschlag wird durch Filtration abgetrennt, mit 20 Milliliter n-Heptan gewaschen und im Vakuum bei 40 °C getrocknet. Das getrocknete Produkt wird in eine Lösung von 2 g Natriumhydrogencarbonat in 50 Milliliter Wasser eingebracht und mit 100 Milliliter Dichlormethan extrahiert. Der Dichlormethan-Extrakt wird mit wässriger Natriumhydrogencarbonat-Lösung (2 g in 50 Milliliter Wasser) gewaschen und anschließend über Natriumsulfat getrocknet. Das Lösungsmittel wird dann bei einer Temperatur von 40 °C im Vakuum abgezogen. Man erhält 3,8 mmol [4-(exo,endo-Bicyclo[2.2.1]hept-5-en-2-yl)-benzyl]-[2-(dimethylamino)ethyl]ether, auch als [2-(4-{Bicyclo[2.2.1]hept-5-en-2-yl}-benzyloxy)-ethyl]-dimethyl-amin bezeichnet, in Form einer blaßgelben Flüssigkeit. Dies entspricht einer Ausbeute von 76 % (bezogen auf 4-(exo,endo-Bicyclo[2.2.1]hept-5-en-2-yl)-benzylchlorid).

Analysendaten für [4-(exo,endo-Bicyclo[2.2.1]hept-5-en-2-yl)-benzyl]-[2-(dimethylamino)ethyl]ether:
NMR (1 H, 500 MHz, CDCl₃): 7.10 - 7.26 (aromatische C-H), 6.25, 5.78 (CH=CH im Ring), 4.51, 4.48 (Phenyl-CH₂-O-); 3.53 (-O-CH₂-CH₂-N), 2.52 (-O-CH₂-CH₂-N), 2.26, 2.27 (N-CH₃).
FTIR (Film auf CaF₂, cm ¹): 1615, 1514 (Aromat), 1 106 (Benzylether C-O-C), 2768 (N-CH₂-), 3057 (=CH- im Ring).

### Beispiel 8

### Herstellung des Polymers 5 mittels ROMP

### Poly{[4-(bicyclo[2.2.1]hept-5-en-2-yl)-benzyl]-[2-(dimethylamino)ethyl]ether}

0,37 mmol von [4-(exo,endo-Bicyclo[2.2.1]hept-5-en-2-yl)-benzyl]-[2-(dimethylamino)ethyl]ether werden unter Schutzgasatmosphäre in 5 Milliliter absolutem (wasserfreiem) und von gelöstem Sauerstoff befreiten Dichlormethan gelöst. Dann werden 0,0012 mmol Katalysator "Bispyridin Complex 6" (Love et al., Angew. Chem., 2002, 114(21), 4207-4209), gelöst in 3 ml absolutiertem Dichlormethan, unter Rühren zugegeben. Die Reaktionsmischung wird 24 h bei Raumtemperatur unter Ausschluss von Feuchtigkeit und Sauerstoff gerührt. Dann wird die Reaktion durch Zugabe von 5 Tropfen Ethylvinylether abgebrochen. Die Reaktionslösung wird im Vakuum eingeengt. Das entstandene Polymer wird in n-Pentan ausgefällt, anschließend aus Dichlormethan/n-Pentan umgefällt und im Vakuum bei 40 °C bis zur Gewichtskonstanz getrocknet.

Man erhält 81 mg von Poly{[4-(bicyclo[2.2.1]hept-5-en-2-yl)-benzyl]-[2-(dimethylamino)ethyl]ether}, auch als Poly{[2-(4-{Bicyclo[2.2.1]hept-5-en-2-yl}-benzyloxy)-ethyl]-dimethyl-amin} bezeichnet, in Form eines blassgelben Feststoffes. Das Polymer ist zum Beispiel in den folgenden Lösungsmitteln löslich: Dichlormethan, Chloroform.

Analysendaten für das Polymer 5:
NMR (1 H, 500 MHz, CDCl3): 4.8-5.7 (CH=CH in der Hauptkette), 7.18 (Aromat), 4.48 (Phenyl-CH₂-O), 3.54 (-O-CH₂-CH₂-N), 2.54 (-O-CH₂-CH₂-N), 2.27 (N-CH₃).
FTIR (Polymerfilm auf CaF₂, cm ¹): 2768 (N-CH₂-), 1615, 1514 (Aromat), 1105 (Benzylether C-O-C), 966 (=CH- in der Hauptkette)

### Beispiel 9

### Bestimmung der antimikrobiellen Wirksamkeit des Polymers 5

Zur mikrobiologischen Prüfung wurde eine 1 %ige Lösungen von Polymer 5 in Chloroform hergestellt. Aus diesen Lösungen wurden Polymerfilme auf 40 x 40 mm große Glasplättchen aufgebracht (Rotationsbeschichtung). An diesen Plättchen wurde mit den Testkeimen Staphylococcus aureus (DSM 346) gemäß dem japanischen Industriestandard JIS Z 2801:2000 die antimikrobielle Aktivität des Polymers 5 geprüft. Als Vergleichsproben wurden unbeschichtete Glas-Plättchen geprüft.

Die Lebendkeimzahlen KBE/ml (Kolonienbildende Einheiten pro Milliliter) wurden direkt nach dem Impfen (Start) bzw. nach 24 Stunden Inkubation für Polymer 5 und die Vergleichsprobe (Glas) bestimmt (siehe Tabelle 9)

**Tabelle 9**

| | Staphylococcus aureus |
|---|---|
| Start [KBE/ml] | 6,00·10⁵ |
| Vergleichssprobe (Glas) [KBE/ml] | 9,77·10⁵ |
| Polymer 5 [KBE/ml] | 1,86·10³ |

## Patentansprüche

1. Biozide Polymere enthaltend wiederkehrende Struktureinheiten nach der Formel 1 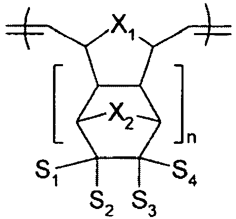
n= 0, 1
wobei X1 und X2 ausgewählt sind aus der Gruppe
-CH₂-, -CH₂-CH₂-, -O- oder =(C=C(R1)R2) mit R1,R2 = H oder ein geradkettiges oder verzweigtes C₁-C₂₀-Alkyl,
wobei die Substituenten S1, S2, S3, S4 ausgewählt sind aus der Gruppe H, geradkettiges oder verzweigtes C₁-C₂₀-Alkyl, Cycloalkyl, Aralkyl, Alkylaryl,
und mindestens einer der Substituenten S1, S2, S3, S4 eine Struktur -a-d, -a-b-d, -b-c-d, oder -a-b-c-d aufweist,
wobei a ein geradkettiges oder verzweigtes C₂-C₂₀-Alkylen, bevorzugt C₂-C₆-Alkylen, ein Siloxan, ein Oligo- oder Polysiloxan mit 1-20 Wiederholungseinheiten, ein C₂-C₄-Alkylenglykol oder C₂-C₄-Polyalkylenglykol mit 1-20 Wiederholungseinheiten, ein Cyclopentylen, Cyclohexylen, Cycloheptylen, ein Benzylen, Phenylethylen, ein Nonylphenylen, ein Phenylen, Naphthylen, ein Methylenphenylen
oder ein Phenylenmethylen ist,
wobei b -O-, -O-CO-, -CO-O-, -O-CO-O-, -CO-, -CO-NH-, -NH-CO-, -O-CO-NH-, -NH-CO-NH-, -NH-C(NH)-NH-, -NH-CO-O- oder -N(R3)- mit R3 = H, ein geradkettiges oder verzweigtes C1-C₆-Alkyl, Phenyl, Benzyl, Phenylethyl oder Nonylphenyl ist,
wobei c ein geradkettiges oder verzweigtes C₁-C₂₀-Alkylen, bevorzugt C₁-C₆-Alkylen, ein Siloxan, ein Oligo- oder Polysiloxan mit 1-20 Wiederholungseinheiten, ein C₂-C₄-Alkylenglykol oder C₂-C₄-Polyalkylenglykol mit 1-20 Wiederholungseinheiten, ein Cyclopentylen, Cyclohexylen, Cycloheptylen, ein Benzylen, Phenylethylen, ein Nonylphenylen, ein Phenylen, Naphthylen, ein Methylenphenylen oder ein Phenylenmethylen ist,
und wobei d
- e(R4)R5 mit e = N oder P,
wobei die Gruppe -e(R4)R5
ein Guanidinyl-Rest -NH-C(NH)-NH₂, ein N-substituierter Gyanidinyl-Rest, ein Biguanidinyl-Rest, ein Hydrazinyl-Rest -NH-NH₂ oder ein N-substituierter Hydrazinyl-Rest ist
und die Reste R4, R5
H, ein geradkettiges oder verzweigtes C₁-C₂₀-Alkyl, Benzyl, Phenylethyl, Nonylphenyl, Phenyl, Naphthyl, Toluyl, Xylyl, Cyclopentyl, Cyclohexyl, Cycloheptyl, Furyl, Pyrrolyl, Thiophenyl oder Pyridinyl sind
oder gemeinsam mit N der Gruppe -N(R4)R5 einen Azirin-, Aziridin-, Azet-, Dihydroazet-, Azetidin-, Pyrrol-, Pyridin-, Azepin- oder Azepan- Ring bilden, wobei der Stickstoff der Gruppe -N(R4)R5 in derartigen ungesättigten Ringen gegebenenfalls eine Doppelbindung zu einem der Substituenten R4, R5 ausbilden und somit in der Gruppe -N(R4)R5 quaterniert vorliegen,
oder gemeinsam mit N der Gruppe -N(R4)R5 und mit einem oder mehreren weiteren unsubstituierten oder substituierten Heteroatomen aus der Gruppe -O-, -S-, -NH-, -N(R6)- mit R6 = H, ein geradkettiges oder verzweigtes C1-C₂₀-Alkyl, Benzyl, Phenylethyl, Nonylphenyl , Cyclopentyl, Cyclohexyl oder Cycloheptyl einen Oxazol-, Triazol-, Tetrazol-, Triazin-, Tetrazin-, Thiomorpholin-, Imidazol-, Thiazol-, Thiadiazol-, Pyrimidin-, Pyrazin-, Pyridazin-, Piperazin- oder N-substituierten Piperazin-Ring bilden, wobei der Stickstoff der Gruppe -N(R4)R5 in derartigen ungesättigten Ringen gegebenenfalls eine Doppelbindung zu einem der Substituenten R4, R5 ausbilden und somit in der Gruppe -N(R4)R5 quaterniert vorliegen,
oder d
ein 3-7 gliedriger gesättigter oder ungesättigter Stickstoff- Heterocyclus, dessen Bindung an die Komponente a, b oder c des Substituenten S1, S2, S3 oder S4 über einen Ring-Kohlenstoff erfolgt, bevorzugt ein Azirin-, Aziridin-, Azet-, Dihydroazet-, Azetidin-, Pyrrol-, Pyrrolidin-, Pyridin-, Piperidin-, Azepin, Azepan-Heterocyclus,
oder ein 5-8 gliedriger gesättigter oder ungesättigter Heterocyclus ist, enthaltend N und eines oder mehrere weitere unsubstituierte oder substituierte Heteroatome aus der Gruppe -O-, -S- ,-NH-, -N(R6)- mit R6 = H, ein geradkettiges oder verzweigtes C₁-C₂₀-Alkyl, Benzyl, Phenylethyl, Nonylphenyl , Cyclopentyl, Cyclohexyl oder Cycloheptyl,
dessen Bindung an die Komponente a, b oder c des Substituenten S1, S2, S3 oder S4 über einen Ring-Kohlenstoff erfolgt, bevorzugt ein Oxazol-, Triazol-, Tetrazol-, Triazin-, Tetrazin-, Morpholin-, Thiomorpholin-, Imidazol-, Thiazol-, Thiadiazol-, Pyrimidin-, Pyrazin-, Pyridazin-, Piperazin- oder N-substituierter Piperazin- Heterocyclus,
sowie kationische Derivate und gesättigte Derivate dieser Polymere.

2. Biozide Polymere nach Anspruch 1, wobei n=0 ist.

3. Biozides Polymer nach Anspruch 1, **dadurch gekennzeichnet dass** es ein Homopolymer oder ein Copolymer ist.

4. Biozides Polymer nach Anspruch 3, **dadurch gekennzeichnet dass** das Copolymer ein statistisches Copolymer, ein alternierendes Copolymer, ein BlockCopolymer oder ein Pfropf-Copolymer ist.

5. Biozider Polymerblend bestehend aus mehreren bioziden Polymeren nach Anspruch 1 oder aus einem oder mehreren bioziden Polymeren nach Anspruch 1 und einem oder mehreren weiteren Polymeren.

6. Biozider Polymerblend nach Anspruch 5, **dadurch gekennzeichnet, dass** die weiteren Polymere Polyurethane, Polyolefine, Polyethylen, Polypropylen, Polysiloxan, Polystyrol, Polyacrylate, Polymethylmethacrylat, PVC, Polyamid oder Polyterephthalat sind.

7. Verwendung biozider Polymere enthaltend wiederkehrende Struktureinheiten nach Formel 1 oder biozider Polymerblends dieser Polymere bzw. ihrer kationischen und gesättigten Derivate, bestehend aus mehreren dieser bioziden Polymere bzw. ihren kationischen und gesättigten Derivaten oder aus einem oder mehreren dieser bioziden Polymere bzw. ihrer kationischen und gesättigten Derivate und einem oder mehreren weiteren Polymeren, zur Herstellung von biozid wirksamen Erzeugnissen, Beschichtungen, Oberflächenmodifizierungen oder medizinischen oder kosmetischen Formulierungen.

8. Verwendung der bioziden Polymere bzw. ihrer kationischen und gesättigten Derivate oder der bioziden Polymerblends gemäß Anspruch 7 in dispergierter oder gelöster Form zur Desinfizierung in Brauch- oder Kühlwassersystemen.

## Claims

1. Biocidal polymers containing repeating structural units according to formula 1 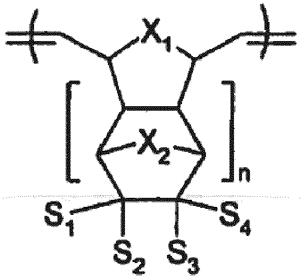
with n = 0.1,
wherein X1 and X2 are selected from the group
-CH₂-, -CH₂-CH₂-, -O-, or =(C=C(R1)R2), with R1, R2 = H or a straight-chain or branched C₁-C₂₀ alkyl,
wherein the substituents S1, S2, S3, S4 are selected from the group H, straight-chain or branched C₁-C₂₀ alkyl, cycloalkyl, aralkyl, alkylaryl,
and at least one of the substituents S1, S2, S3, S4 has a structure -a-d, -a-b-d, -b-c-d, or -a-b-c-d,
wherein a is a straight-chain or branched C₂-C₂₀ alkylene, preferably C₂-C₆ alkylene, a siloxane, an oligosiloxane or polysiloxane with 1-20 repetition units, a C₂-C₄ alkylene gycol or C₂-C₄ polyalkylene glycol with 1-20 repetition units, a cyclopentylene, cyclohexylene, cycloheptylene, a benzylene, phenylethylene, a nonylphenylene, a phenylene, naphthylene, a methylenephenylene or a phenylenemethylene,
wherein b is -O-, -O-CO-, -CO-O-, -O-CO-O-, -CO-, -CO-NH-, -NH-CO-, -O-CO-NH-, -NH-CO-NH-, -NH-C(NH)-NH-, -NH-CO-O- or -N(R3)- with R3 = H, a straight-chain or branched C₁-C₆ alkyl, phenyl, benzyl, phenylethyl or nonylphenyl, wherein c is a straight-chain or branched C₁-C₂₀ alkylene, preferably C₁-C₆ alkylene, a siloxane, an oligosiloxane or polysiloxane with 1-20 repetition units, a C₂-C₄ alkylene glycol or C₂-C₄ polyalkylene glycol with 1-20 repetition units, a cyclopentylene, cyclohexylene, cycloheptylene, a benzylene, phenylethylene, a nonylphenylene, a phenylene, naphthylene, a methylenephenylene or a phenylenemethylene,
and wherein d
is -e(R4)R5 with e = N or P,
wherein the group -e(R4)R5
is a guanidinyl group -NH-C(NH)-NH₂, an N-substituted guanidinyl group, a biguanidinyl group, a hydrazinyl group, - NH-NH₂ or an N-substituted hydrazinyl group
and the groups R4, R5
are H, a straight-chain or branched C₁-C₂₀ alkyl, benzyl, phenylethyl, nonylphenyl, phenyl, naphthyl, toluyl, xylyl, cyclopentyl, cyclohexyl, cycloheptyl, furyl, pyrrolyl, thiophenyl or pyridinyl
or together with N of the group
-N(R4)R5 form an azirine, aziridine, azete, dihydroazete, azetidine, pyrrole, pyridine, azepine or azepane ring, wherein the nitrogen of the group -N(R4)R5 in unsaturated rings of this kind forms, as appropriate, a double bond to one of the substituents R4, R5 and is thus present in the group -N(R4)R5 in a quaternised state,
or together with N of the group
-N(R4)R5 and with one or more further unsubstituted or substituted heteroatoms from the group -O-, -S-, -NH-, -N(R6)-with R6 = H, a straight-chain or branched C₁-C₂₀ alkyl, benzyl, phenylethyl, nonylphenyl, cyclopentyl, cyclohexyl or cycloheptyl form an oxazole, triazole, tetrazole, triazine,
tetrazine, thiomorpholine, imidazole, thiazole, thiadiazole, pyrimidine, pyrazine, pyridazine, piperazine or N-substituted piperazine ring, wherein the nitrogen of the group -N(R4)R5 in unsaturated rings of this kind form, as appropriate, a double bond to one of the substituents R4, R5 and are thus present in the group -N(R4)R5 in quaternised form,
or d
is a 3-7-membered saturated or unsaturated nitrogen heterocycle which is bonded to component a, b or c of substituent S1, S2, S3 or S4 via a ring carbon, preferably an azirine, aziridine, azete, dihydroazete, azetidine, pyrrole, pyrrolidone, pyridine, piperidine, azepine or azepane heterocycle,
or is a 5-8-membered saturated or unsaturated heterocycle, containing N and one or more further unsubstituted or substituted heteroatoms from the group -O-, -S-, -NH-, - N(R6)- with R6 = H, a straight-chain or branched C₁-C₂₀ alkyl, benzyl, phenylethyl, nonylphenyl, cyclopentyl, cyclohexyl or cycloheptyl, which is bonded to component a, b or c of substituent S1, S2, S3 or S4 via a ring carbon, preferably an oxazole, triazole, tetrazole, triazine, tetrazine, morpholine, thiomorpholine, imidazole, thiazole, thiadiazole, pyrimidine, pyrazine, pyridazine, piperazine or N-substituted piperazine heterocycle,
and cationic derivatives and saturated derivatives of these polymers.

2. Biocidal polymers according to claim 1, wherein n = 0.

3. Biocidal polymer according to claim 1, **characterised in that** it is a homopolymer or a copolymer.

4. Biocidal polymer according to claim 3, **characterised in that** the copolymer is a random copolymer, an alternating copolymer, a block copolymer or a graft copolymer.

5. Biocidal polymer blend consisting of a plurality of biocidal polymers according to claim 1 or of one or more biocidal polymers according to claim 1 and one or more further polymers.

6. Biocidal polymer blend according to claim 5, **characterised in that** the further polymers are polyurethanes, polyolefins, polyethylene, polypropylene, polysiloxane, polystyrene, polyacrylates, poly(methyl methacrylate), PVC, polyamide or polyterephthalate.

7. Use of biocidal polymers containing repeating structural units according to formula 1 or biocidal polymer blends of these polymers or cationic and saturated derivatives thereof, consisting of a plurality of these biocidal polymers or cationic and saturated derivatives thereof or of one or more of these biocidal polymers or cationic and saturated derivatives thereof and one or more further polymers, for the preparation of biocidally active products, coatings, surface modifications or medical or cosmetic formulations.

8. Use of the biocidal polymers or cationic and saturated derivatives thereof or the biocidal polymer blends according to claim 7 in dispersed or dissolved form for disinfection in service water or cooling water systems.

## Revendications

1. Polymères biocides contenant des unités structurelles récurrentes selon la formule 1 : 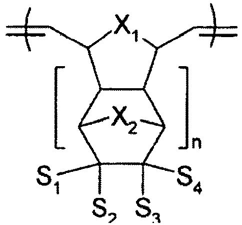
n = 0, 1
où X1 et X2 sont choisis parmi le groupe
-CH₂-, -CH₂-CH₂-, -O- ou =(C=C(R1)R2) avec R1,R2 = H ou un C₁-C₂₀-alkyle linéaire ou ramifié,
où les substituts S1, S2, S3, S4 sont choisis parmi le groupe constitué de H, un C₁-C₂₀-alkyle, un cycloalkyle, un aralkyle ou un alkylaryle linéaire ou ramifié,
et au moins un des substituts S1, S2, S3, S4 présente une structure -a-d, -a-b-d, -b-c-d ou -a-b-c-d,
où a est un C₂-C₂₀-alkylène linéaire ou ramifié, de préférence un C₂-C₆-alkylène, un siloxane, un oligosiloxane ou un polysiloxane avec 1 à 20 unités récurrentes, un C₂-C₄-alkylèneglycol ou un C₂-C₄-polyalkylèneglycol avec 1 à 20 unités récurrentes, un cyclopentylène, un cyclohexylène, un cycloheptylène, un benzylène, un phényléthylène, un nonylphénylène, un phénylène, un naphtylène, un méthylènephénylène ou un phénylèneméthylène,
où b est -O-, -O-CO-, -CO-O-, -O-CO-O-, -CO-, -CO-NH-, -NH-CO-, -O-CO-NH-, -NH-CO-NH-, -NH-C(NH)-NH-, -NH-CO-O- ou -N(R3)- avec R3 = H, un C₁-C₆-alkyl linéaire ou ramifié, un phényle, un benzyle, un phényléthyle ou un nonylphényle,
où c est un C₁-C₂₀-alkylène linéaire ou ramifié, de préférence un C₁-C₆-alkylène, un siloxane, un oligosiloxane ou un polysiloxane avec 1 à 20 unités récurrentes, un C₂-C₄-alkylèneglycol ou un C₂-C₄-polyalkylèneglycol avec 1 à 20 unités récurrentes, un cyclopentylène, un cyclohexylène, un cycloheptylène, un benzylène, un phényléthylène, un nonylphénylène, un phénylène, un naphtylène, un méthylènephénylène ou un phénylèneméthylène,
et où d est
-e(R4)R5 avec e = N ou P,
où le groupe -e(R4)R5
est un reste guanidinyle -NH-C(NH)-NH₂, un reste guanidinyle à substitution N, un reste biguanidinyle, un reste hydrazinyle -NH-NH₂ ou un reste hydrazinyle à substitution N
et les restes R4, R5
sont H, un C₁-C₂₀-alkyle linéaire ou ramifié, un benzyle, un phényléthyle, un nonylphényle, un phényle, un naphtyle, un toluyle, un xylyle, un cyclopentyle, un cyclohexyle, un cycloheptyle, un furyle, un pyrrolyle, un thiophényle ou un pyridinyle
ou forment avec N du groupe -N(R4)R5 un cycle azirine, aziridine, acétate, dihydroacétate, azétidine, pyrrol, pyridine, azépine ou azépane, l'azote du groupe -N(R4)R5 formant le cas échéant dans ce type de cycles insaturés une double liaison avec un des substituts R4, R5 et se trouvant donc quaternisé dans le groupe -N(R4)R5,
ou forment avec N du groupe -N(R4)R5 et avec un ou plusieurs autres hétéroatomes substitués ou non substitués du groupe -O-, -S-, -NH-, -N(R6)-avec R6 = H, un C₁-C₂₀alkyle linéaire ou ramifié, un benzyle, un phényléthyle, un nonylphényle, un cyclopentyle, un cyclohexyle ou un cycloheptyle, un cycle oxazol, triazol, tétrazol, triazine, tétrazine, thiomorpholine, imidazol, thiazol, thiadiazol, pyrimidine, pyrazine, pyridazine, pipérazine ou pipérazine à substitution N, l'azote du groupe -N(R4)R5 formant le cas échéant dans ce type de cycles insaturés une double liaison avec un des substituts R4, R5 et se trouvant donc quaternisé dans le groupe -N(R4)R5,
ou d est
un hétérocycle azoté saturé ou insaturé de 3 à 7 chaînons dont la liaison aux composants a, b ou c du substituant S1, S2, S3 ou S4 se fait par un atome de carbone du cycle, de préférence un hétérocycle azirine, aziridine, acétate, dihydroacétate, azétidine, pyrrol, pyrrolidine, pyridine, pipéridine, azépine ou azépane,
ou un hétérocycle saturé ou insaturé de 5 à 8 chaînons contenant N et un ou plusieurs autres hétéroatomes substitués ou non substitués du groupe -O-, -S-, -NH-, -N(R6)-avec R6 = H, un C₁-C₂₀alkyle linéaire ou ramifié, un benzyle, un phényléthyle, un nonylphényle, un cyclopentyle, un cyclohhexyle ou un cycloheptyle, dont la liaison aux composants a, b ou c du substituant S1, S2, S3 ou S4 se fait par un atome de carbone du cycle, de préférence un hétérocycle oxazol, triazol, tétrazol, triazine, tétrazine, morpholine, thiomorpholine, imidazol, thiazol, thiadiazol, pyrimidine, pyrazine, pyridazine, pipérazine ou pipérazine à substitution N,
ainsi que les dérivés cationiques et dérivés saturés de ces polymères.

2. Polymères biocides selon la revendication 1, dans lesquels n = 0.

3. Polymère biocide selon la revendication 1, **caractérisé en ce qu'**il est un homopolymère ou un copolymère.

4. Polymère biocide selon la revendication 3, **caractérisé en ce que** le copolymère est un copolymère statistique, un copolymère alterné, un copolymère bloc ou un copolymère greffé.

5. Mélange polymère biocide constitué de plusieurs polymères biocides selon la revendication 1 ou d'un ou plusieurs polymères biocides selon la revendication 1 ou d'un ou plusieurs autres polymères.

6. Mélange polymère selon la revendication 5, **caractérisé en ce que** les autres polymères sont des polyuréthanes, des polyoléfines, du polyéthylène, du polypropylène, du polysiloxane, du polystyrène, des polyacrylates, du polyméthacrylate de méthyle, du PVC, du polyamide ou du polytéréphtalate.

7. Utilisation de polymères biocides contenant des unités structurelles récurrentes selon la formule 1 ou de mélanges polymères biocides de ces polymères ou de leurs dérivés cationiques et saturés, constitués de plusieurs de ces polymères biocides ou de leurs dérivés cationiques et saturés, ou d'un ou plusieurs de ces polymères biocides ou de leurs dérivés cationiques et saturés et d'un ou plusieurs autres polymères, pour la fabrication de produits, de revêtements, de modifications de surface ou de formulations médicales ou cosmétiques ayant un effet biocide.

8. Utilisation des polymères biocides ou de leurs dérivés cationiques et saturés ou des mélanges polymères biocides selon la revendication 7 sous forme dispersée ou dissoute pour la désinfection dans des systèmes d'eau de service ou de refroidissement.
